Europäisches Patentamt

(19) European Patent Office

Office européen des brevets

(11) Publication number: **0 321 007 B1**

(12) **EUROPEAN PATENT SPECIFICATION**

(45) Date of publication of patent specification :
16.10.91 Bulletin 91/42

(51) Int. Cl.⁵: **F17C 5/02, F17C 13/04, B60K 15/03, F16K 15/02, F16K 27/00**

(21) Application number: 88202532.3

(22) Date of filing: 11.11.88

(54) Filling valve for filling a fuel tank of a vehicle with liquid gas.

(30) Priority: 14.12.87 NL 8703018

(43) Date of publication of application:
21.06.89 Bulletin 89/25

(45) Publication of the grant of the patent:
16.10.91 Bulletin 91/42

(84) Designated Contracting States:
AT BE CH DE ES FR GB GR IT LI LU NL SE

(56) References cited:
EP-A- 0 148 533
DE-C- 3 209 007
GB-A- 967 733
NL-A- 7 902 309
US-A- 4 420 022

(73) Proprietor: FIEGE LPG SERVICE B.V.
Burg. v. Amersfoordtlaan 1a
NL-1171 DL Badhoevedorp (NL)

(72) Inventor: Fiege, Johannes Hermanus
Hendrikus
Burg. van Amersfoordtlaan 1A
NL-1171 DL Badhoevedorp (NL)

(74) Representative: Baarslag, Aldert D. et al
Nederlandsch Octrooibureau
Scheveningseweg 82 P.O. Box 29720
NL-2502 LS 's-Gravenhage (NL)

# Description

The invention relates to a filling valve for filling a fuel tank of a vehicle with pressurized fuel, such as liquid gas (LPG), comprising a valve housing with non-return valve, a fitting which, viewed in the direction of flow, is situated upstream of the non-return valve and has means for coupling thereto a filling line, and means situated past the valve for connection to the housing of the line to the fuel tank, said valve housing being in one piece with the fitting, said fitting having means for rigidly fixing the valve housing to the cowling of the vehicle.

Such a filling valve is known from Dutch Patent Application 8400039, which has been laid open for inspection and corresponds to European Patent 0,148,533.

This known valve is provided with a fitting with screw thread and has upstream of the valve part a flange which runs radially outwards from the fitting part and is integral with the valve housing, and which serves to fasten the filling valve to the cowling of the vehicle. Such a filling valve hardly projects beyond the cowling of the vehicle, and therefore permits flush fitting.

Apart from fittings provided with a screw thread, fittings are known, for example in France, comprising a cylindrical chamber having on the outward-facing side an inward-facing flange which serves as the supporting edge for fixing behind it the coupling of the filling line or filling hose. These known filling valves have in the bottom of the cylindrical chamber threaded holes for fixing the valve housing to the cowling of the vehicle. They thus project with the fitting beyond the cowling by a distance or 1 1/2 to 2 cm, which is ugly and thus undesirable.

The object of the invention is then to produce a filling valve of which the valve housing with fixing means, said valve housing being provided with a fitting part with inward-facing edge, no longer projects appreciably beyond the cowling of the vehicle and thus permits as flush an installation as that in the filling valve mentioned in the preamble.

This object is achieved according to the invention in that the fitting comprises a cylindrical chamber with smooth inner wall situated upstream of the valve, at least in the part of the inner wall facing away from the valve and running through to the outside edge of the fitting, said cylindrical chamber being provided in its outer wall, or in parts being integral therewith, with fixing means, such as screw-threaded holes, and the fitting towards the outside is determined by a disc with an aperture which is concentric with, but smaller than the diameter of the cylindrical chamber, said disc having fixing means, such as screw-threaded holes, which are in line with the fixing means of the outer wall of the cylindrical chamber, all this being in such a way that when the valve is fitted the edge of an aperture in the cowling of the vehicle is clamped between the disc and the outside edge of the cylindrical chamber.

According to the invention the inward-facing supporting edge of the fitting, intended for hooking the hose coupling behind it, is formed by the edge of the aperture of a disc which during the fitting in the cowling of the vehicle comes to rest concentrically relative to the cylindrical chamber in such a way that it forms the edge.

The fitting part, with the exception of the edge formed by the disc, is therefore outside the cowling only with the disc, while the valve housing itself is situated entirely within the cowling. The cowling is itself clamped between valve housing and disc.

It is observed that from NL-A-7902309 a filling valve is known of the type in which the connection with the filling line has to be performed by means of screw thread. The screw-threaded part of the fitting is part of a valve housing which is axially shiftably mounted inside a housing of square cross-section. This housing has an outwardly extending flange by means of which said housing is secured upon the inner side of the cowling of the vehicle with the aid of a tensioning mechanism and an outwardly flanged bushing having its flange on the outer side of the cowling. This known filling valve does not have an inwardly extending flange for performing the connection with the nozzle of a filling line in which the nozzle has means which have to grip behind the inwardly extending flange and cannot be provided with such an inwardly extending flange.

The invention will now be explained in greater detail with reference to the drawings.

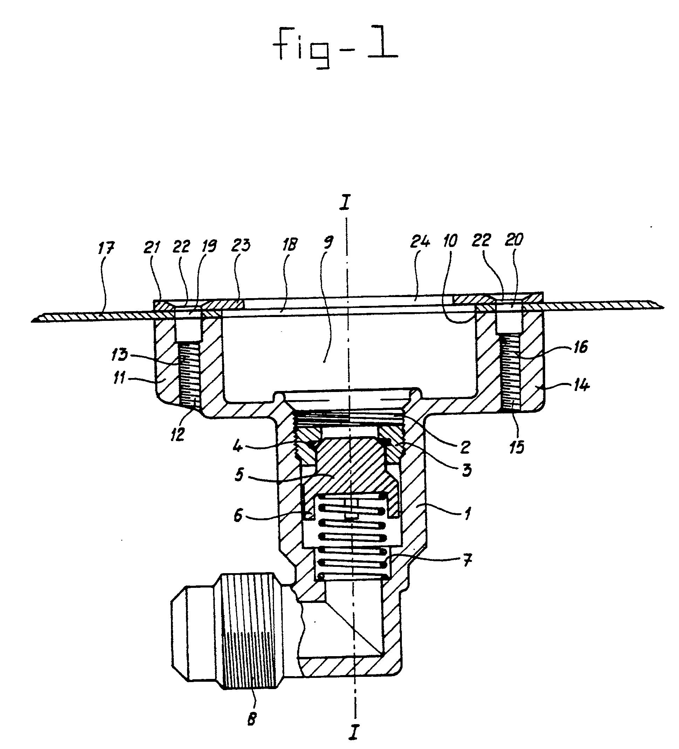

Fig. 1 shows a valve according to the invention in cross section, with two different connection possibilities to the cowling of the bodywork left and right respectively of the vertical centre line.

Fig. 2 shows a valve according to the invention according to another embodiment, again with two different connection possibilities left and right respectively.

The valve housing 1 is provided with a valve seat 3 screwed into screw thread 2 and having sealing ring 4 which works in concert with a non-return valve 5 with guide wings 6, said valve 5 being held in the closed position by a compression spring 7.

The valve housing 1 has a nipple 8 which is integral therewith, for connection of the line to the fuel tank.

Upstream of the valve seat is a cylindrical chamber 9, the inner wall of which runs through cylindrically to the end 10.

In the embodiment shown left of the centre line I-I the housing of the valve at the outer wall of the cylindrical chamber 9 is provided with a number of bosses 11 which are integral therewith, for example four, distributed uniformly along the periphery, and each provided with a bore 12 with internal screw thread 13.

In the embodiment shown to the right of the centre line I-I, the cylindrical wall of the fitting chamber 9 is designed with great thickness over the entire periphery, as indicated by 14. In this thick edge there are again bores 15 with internal screw thread 16.

The cowling 17 of the vehicle has an aperture 18, the diameter of which corresponds, or at least is not smaller than, that of the inner wall of the cylindrical chamber 9, and which is provided with holes 19, 20 corresponding to the bores 12, 15 respectively.

A disc 21, provided with holes 22 for countersunk screws (not shown) is provided on the outside of this cowling.

This disc has an inward-facing edge 23 or, in other words, an aperture 24 whose diameter is smaller than that of the inner wall of the chamber 9. Said edge 23 forms the edge for support of the hose coupling.

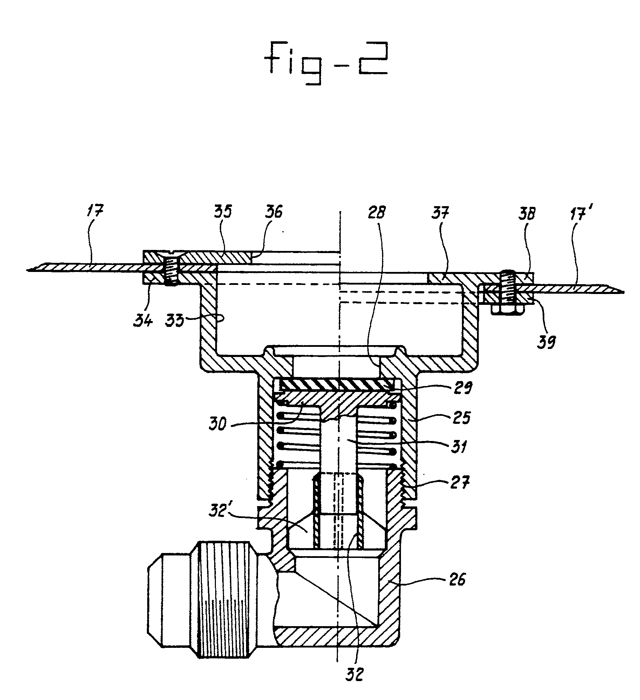

The embodiment shown in Fig. 2 comprises the housing parts 25 and 26 which are joined to each other as indicated at 27, for example by means of screw thread. The housing part 25 has a valve seat 28 for a flat valve 29, for example made of rubber, which is fitted on a dish-type carrier 30 with guide stem 31, which rests by means of a spring on a guide element 32 which rests with radial wings 33 allowing through the flow on the interior of the housing part 26.

In the lefthand part of Fig. 2 the cylindrical chamber 33 has an outward-directed flange 34. The cowling 17 of the bodywork is clamped between the flange 34 and a ring 35, the internal diameter of which, being determined by the edge 36, is smaller than the internal diameter of the cylindrical chamber 33, so that the edge needed for supporting the connection coupling is formed.

In the embodiment shown on the right in Fig. 2 the side wall of the cylindrical chamber has an inward-facing flange 37 and an outward-facing flange 38. The cowling 17' is clamped between a ring 39 and the flange 38.

All embodiments permit fitting of the filling valve in such a way that it hardly projects beyond the outer face of the bodywork.

## Claims

1. Filling valve for filling a fuel tank of a vehicle with pressurized fuel, such as liquid gas (LPG), comprising a valve housing (1, 25) with non-return valve (5, 29), a fitting (9, 33) which, viewed in the direction of flow, is situated upstream of the non-return valve and has means (23, 36, 37) for coupling thereto a filling line, and means (8) situated past the valve for connection to the housing of the line to the fuel tank, said valve housing (1, 25) being in one piece with the fitting, said fitting having means (22) for rigidly fixing the valve housing to the cowling of the vehicle, characterized in that the fitting comprises a cylindrical chamber (9, 33) with smooth inner wall situated upstream of the valve (5, 29), at least in the part of the inner wall facing away from the valve and running through to the outside edge of the fitting, said cylindrical chamber being provided in its outer wall, or in parts being integral therewith, with fixing means, such as screw-threaded holes (13, 16), and the fitting towards the outside is determined by a disc (21, 35, 39) with an aperture (24, 36) which is concentric with, but smaller than the diameter of the cylindrical chamber (9, 33), said disc having fixing means, such as screw-threaded holes (22), which are in line with the fixing means (13, 16) of the outer wall of the cylindrical chamber (9, 33), all this being in such a way that when the valve is fitted the edge of an aperture in the cowling (17) of the vehicle is clamped between the disc (21, 35, 39) and the outside edge (10, 34, 38) of the cylindrical chamber.

## Patentansprüche

1. Füllventil zum Befüllen eines Brennstoffbehälters eines Fahrzeugs mit unter Druck stehendem Brennstoff, wie Flüssiggas (LPG), mit einem Ventilgehäuse (1, 25) mit einem Rückschlagventil (5, 29), einem Anschluß (9, 33), der in Strömungsrichtung gesehen vor dem Rückschlagventil angeordnet ist und eine Einrichtung (23, 36, 37) zum Verbinden mit einer Fülleitung aufweist, und mit einer Einrichtung (8), die hinter dem Ventil angeordnet ist, um die Verbindung mit dem Gehäuse der Leitung zum Brennstoffbehälter herzustellen, wobei das Ventilgehäuse (1, 25) mit dem Anschluß einstückig ist, der eine Einrichtung (22) zum starren Befestigen des Ventilgehäuses an der Fahrzeugkarosserie aufweist, **dadurch gekennzeichnet,** daß der Anschluß eine Zylinderkammer (9, 33) mit glatter Innenwand und vor dem Ventil (5, 29) aufweist, wobei zumindest in dem Teil der Innenwand, der von dem Ventil wegweist und durchgehend bis zur Außenkante des Anschlusses verläuft, die Zylinderkammer an ihrer Außenwand oder in Teilen, die mit dieser einstückig sind, mit Befestigungseinrichtungen, wie Gewindebohrungen (13, 16) versehen ist, und daß der Anschluß nach außen durch eine Scheibe (21, 35, 39) mit einer Bohrung (24, 36) bestimmt wird, die konzentrisch zur Zylinderkammer (9, 33) aber im Durchmesser kleiner als diese ist, wobei die Scheibe Befestigungseinrichtungen, wie Gewindebohrungen (22), aufweist, die mit den Befestigungseinrichtungen (13, 16) der Außenwand der Zylinderkammer (9, 33) ausgerichtet sind, so daß bei eingepaßtem Ventil die Kante einer Öffnung in der Fahrzeugkarosserie (17) zwischen der Scheibe (21, 35, 39) und der Außenkante (10, 34, 38) der Zylinderkammer festgeklemmt ist.

## Revendications

1. Soupape de remplissage pour remplir un réservoir de combustible d'un véhicule avec un combustible sous pression, tel qu'un gaz liquide (GPL), comprenant un logement de soupape (1, 25) avec un clapet de non-retour (5, 29), un raccord (9, 33) qui, vu dans la direction de l'écoulement, est situé en amont du clapet de non-retour et comprend des moyens (26, 36, 37) pour y accoupler une ligne de remplissage, et des moyens (8) situés au-delà de la soupape pour établir la connexion entre le logement et la ligne allant au réservoir de combustible, ledit logement de soupape (1, 25) étant d'une seule pièce avec le raccord, ledit raccord comprenant des moyens (22) pour fixer rigidement le logement de soupape au capotage du véhicule, caractérisée en ce que le raccord comprend une chambre cylindrique (9, 33) à paroi interne lisse située en amont de la soupape (5, 29), au moins dans la partie de la paroi interne qui est tournée à l'opposé de la soupape et qui s'étend jusqu'au bord externe du raccord, ladite chambre cylindrique étant munie dans sa paroi externe, ou dans des parties en faisant partie intégrante, de moyens de fixation, tels que des trous taraudés (13, 16), et le raccord se terminant en direction de l'extérieur par un disque (21, 35, 39) comportant une ouverture (24, 36) qui est concentrique au diamètre de la chambre cylindrique (9, 33) mais plus petite que celui-ci, ledit disque comprenant des moyens de fixation tels que des trous taraudés (22) qui sont en ligne avec les moyens de fixation (13, 16) de la paroi externe de la chambre cylindrique (9, 33), tout ceci de manière que lorsque la soupape est mise en place, le bord d'une ouverture du capotage (17) du véhicule soit serré entre le disque (21, 35, 39) et le bord externe (10, 34, 38) de la chambre cylindrique.

# Fig-1

## Fig-2